# EUROPÄISCHE PATENTSCHRIFT

(11) **EP 0 826 538 B1**
(45) Veröffentlichungstag und Bekanntmachung des Hinweises auf die Patenterteilung: **14.11.2001**
(21) Anmeldenummer: 97114643.6
(22) Anmeldetag: 23.08.1997
(51) Int. Cl.: B60J 7/16

(54) **Fahrzeugdach**
Vehicle roof
Toit de véhicule

(30) Priorität: 30.08.1996 DE 19635145
(43) Veröffentlichungstag der Anmeldung: 04.03.1998
(73) Patentinhaber: WEBASTO THERMOSYSTEME GmbH, D-82131 Stockdorf (DE)
(72) Erfinder: Poppele, Gebhard, 82294 Oberschweinbach (DE); Saleh, Hussam Eddin, 80809 München (DE)
(74) Vertreter: Wiese, Gerhard

(56) Entgegenhaltungen:
- EP-A- 0 249 268
- GB-A- 2 133 750
- US-A- 5 069 501

## Beschreibung

Die Erfindung betrifft ein Fahrzeugdach mit einer von einem Deckel wahlweise verschließbaren Dachöffnung in einer festen Dachhaut, wobei mindestens eine Deckelmechanik mit mindestens einer vorderen und einer feststehend dazu angeordneten hinteren Bahn vorgesehen ist, in welchen jeweils ein erstes bzw. zweites Eingriffselement verschiebbar geführt ist gemäß dem Oberbegriff des Patentanspruchs 1.

Eine solches gattungsgemäßes Fahrzeugdach ist beispielsweise aus der japanischen Gebrauchsmusteranmeldung 57-108 567 bekannt. Dabei sind die vordere und die hintere Bahn als Kulissenschlitze in einem in Dachlängsrichtung verschiebbaren Führungselement ausgebildet, wobei in den vorderen Schlitz ein deckelfester Kulissenstift eingreift, während in den hinteren Schlitz ein über einen Hebel an dem Deckel angelenkter Kulissenstift eingreift. Aus der Schließstellung wird das Führungselement gegenüber dem Deckel verschoben, was zunächst ein Anheben der Deckelvorderkante bewirkt. Der vordere Schlitz ist kürzer als der hintere Schlitz. Dadurch kann der angelenkte hintere Kulissenstift noch in dem hinteren Schlitz gleiten, während der deckelfeste vordere Kulissenstift bereits von dem vorderen Ende des vorderen Schlitzes mitgenommen wird. Das Verschieben des angelenkten Kulissenstifts in dem hinteren Kulissenschlitz bewirkt ein Verschwenken und Anheben des Hebels und dadurch ein Anheben der Deckelhinterkante. In der Öffnungsendstellung ist die Dachöffnung durch das Zurückschieben des Deckels teilweise freigelegt und die Deckelhinterkante ist über die Deckelvorderkante angehoben.

Ein weiteres gattungsgemäßes Fahrzeugdach ist aus DE 26 58 018 C2 bekannt. Dabei sind jeweils zwei mit ihrem oberen Ende deckelfest angelenkte gleichlange Hebel vorgesehen, deren unteres Ende jeweils in einem dachfesten Kulissenschlitz geführt ist. In Schließstellung sind die beiden Hebel spiegelbildlich zueinander abgewinkelt angeordnet. Je nach dem, ob der vordere, der hintere oder beide Hebel in Dachlängsrichtung entlang des jeweiligen Kulissenschlitzes verschoben werden, werden die Deckelvorderkante, die Deckelhinterkante oder beide zusammen über die feste Dachhaut angehoben. Der vordere und der hintere Hebel werden getrennt voneinander angetrieben. Ein anderes gattungsgemäßes Fahrzeugdach ist aus DE 30 38 353 C2 bekannt. Dabei sind auf jeder Deckelseite zwei deckelfeste Kulissenschlitze vorgesehen, wobei in den vorderen Kulissenschlitz ein an einem in Dachlängsrichtung verschiebbaren Schlitten ausgebildeter Kulissenstift eingreift, während der in den hinteren Kulissenschlitz eingreifende Kulissenstift an dem oberen Ende eines ersten Hebels sitzt, der mit seinem anderen, unteren Ende an einem in Dachlängsrichtung verschiebbaren Schlitten angelenkt ist. Die beiden Schlitten sind gegeneinander verschiebbar, wobei der erste Hebel bezüglich des Schlittens verschwenkt wird und ein zweiter Hebel, der mit einem Ende an dem vorderen Schlitten angelenkt ist, mit seinem anderen Ende an dem oberen Ende des zweiten Hebels angelenkt ist. Es ist eine Verriegelungsvorrichtung vorgesehen, welche über eine Blattfeder dachfest arretiert werden kann. Ein deckelfester Kulissenstift greift in einen senkrecht nach oben verlaufenden Kulissenschlitz ein, der an der Verriegelungsvorrichtung ausgebildet ist, so daß der Deckel zeitweise an einer Verschiebung in Dachlängsrichtung gehindert wird. Der Deckel kann mit seiner Hinterkante ausgestellt werden oder er kann als Ganzes abgesenkt werden, um unter die feste Dachhaut zurückgeschoben zu werden und somit die Dachöffnung freizulegen.

Ferner ist ein gattungsgemäßes Fahrzeugdach aus DE 30 25 340 A1 bekannt. Hierbei sind zwei deckelfeste Kulissenschlitze vorgesehen, wobei in den vorderen Kulissenschlitz ein an einem in Dachlängsrichtung verschiebbaren Schlitten ausgebildeter Kulissenstift eingreift, während in den hinteren Kulissenschlitz ein an dem einen Ende eines Hebels ausgebildeter Kulissenstift eingreift. Das andere Ende des Hebels ist an einen in Dachlängsrichtung verschiebbaren Schlitten angelenkt. Der Deckel kann mit seiner Hinterkante ausgeschwenkt werden oder als Ganzes abgesenkt werden und dann unter die feste Dachhaut nach hinten geschoben werden.

Nachteilig bei diesen bekannten Anordnungen ist die relativ aufwendige Mechanik.

Aus der gattungsgemäßen GB-A-2 133 750 ist ein Fahrzeugdach bekannt, bei dem eine Ausstellbewegung eines Deckels über zwei Kulissenbahnen und in diese eingreifende Stifte bewirkt wird. Der dort gezeigte Deckel ist ausschließlich mit seiner Hinterkante ausstellbar und über das feste Dach nach hinten verschiebbar. Eine flexible Einstellung mehrerer Lüfterpositionen ist mit der dort offenbarten Mechanik nicht erreichbar.

Es ist Aufgabe der vorliegenden Erfindung, ein Fahrzeugdach zu schaffen, welches möglichst einfach aufgebaut ist und dennoch eine Vielzahl verschiedener Deckelstellungen ermöglicht.

Diese Aufgabe wird durch die Merkmale des Patentanspruchs 1 gelöst. Vorteilhafte Ausgestaltungen der Erfindung sind den Unteransprüchen zu entnehmen.

In einer vorteilhaften Ausgestaltung der Erfindung ist vorgesehen, daß die vordere und die hintere Bahn deckelfest und die beiden Eingriffselemente gegenüber der festen Dachhaut verschiebbar angeordnet sind. Dies erlaubt einen besonders einfachen Antrieb der Deckelmechanik.

In bevorzugter Ausführung ist der Deckel an einer Verschiebung in Dachlängsrichtung im wesentlichen gehindert, wobei vorzugsweise eine dritte deckelfeste Bahn vorgesehen ist, in welcher ein dachfestes drittes Eingriffselement verschiebbar geführt ist. Dies erlaubt eine möglichst einfache Ausbildung der Deckelmechanik für den Fall, daß ein Freilegen der Dachöffnung nicht gewünscht ist.

Ferner ist bevorzugt vorgesehen, daß die deckelfesten Bahnen als Kulissenschlitze und die Eingriffselemente als Kulissenstifte ausgeführt sind, wobei der vordere und der hintere Kulissenschlitz bevorzugt so ausgebildet sind, daß folgende Deckelstellungen möglich sind: nur Deckelhinterkante angehoben; Deckelvorderkante und Deckelhinterkante angehoben; nur Deckelhinterkante angehoben. Dies ermöglicht bei einfacher Ausführung der Deckelmechanik alle wesentlichen Lüftungsstellungen des Deckels.

Vorzugsweise wird die Erfindung bei Nutzfachzeugkabinen verwendet, da die dort mögliche große Einbauhöhe entsprechend große Verstellstrecken des Deckels erlaubt.

Weitere bevorzugte Ausgestaltungen der Erfindung ergeben sich aus den Unteransprüchen.

Im folgenden ist eine Ausführungsform der Erfindung anhand der beiliegenden Zeichenungen näher erläutert. Es zeigen:
FIG. 1 eine perspektivische Ansicht eines erfindungsgemäßen Fahrzeugdaches, und
FIG. 2 bis 5 Seitenansichten des Fahrzeugdaches aus FIG. 1 in verschiedenen Stellungen.

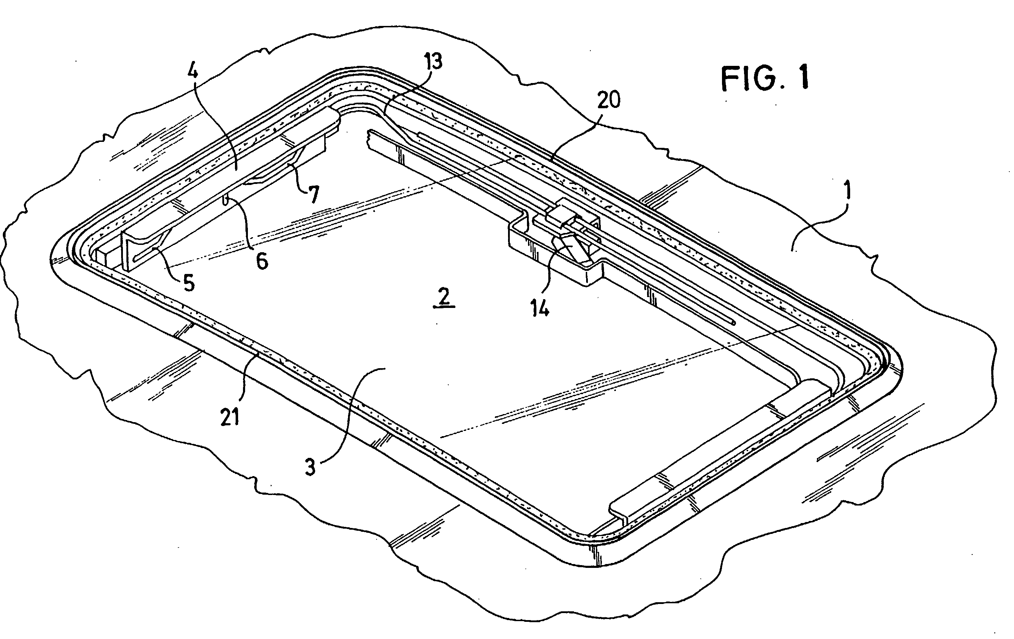

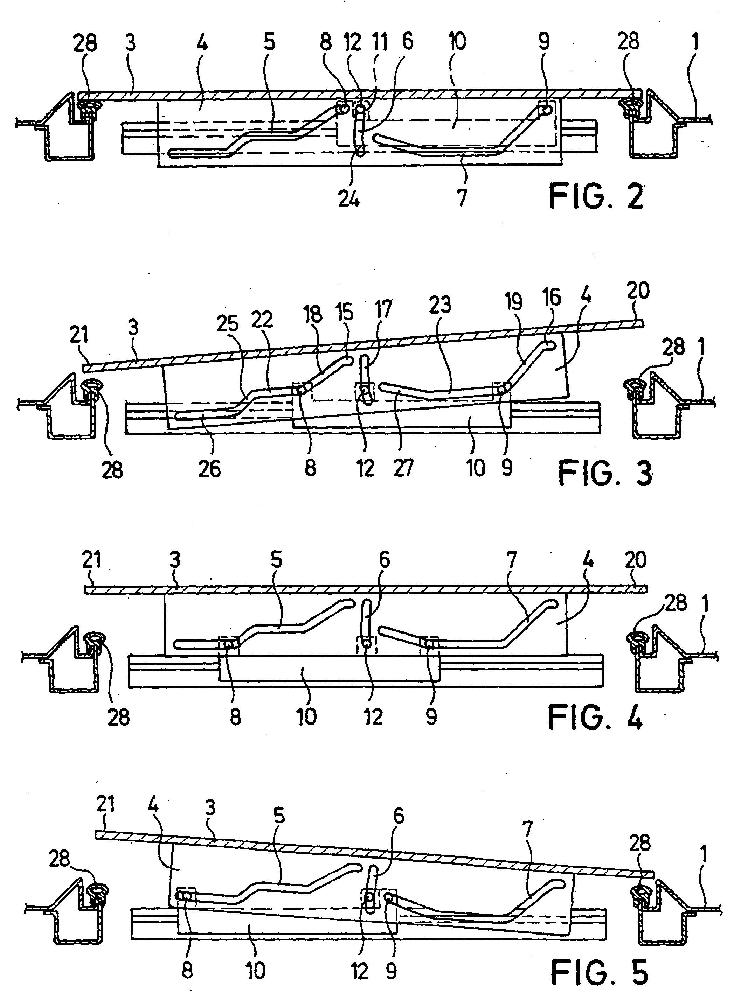

Unter Bezugnahme auf FIG. 1 ist in einer festen Dachhaut 1 eine Dachöffnung 2 ausgebildet, die von einem beispielsweise lichtdurchlässigen Deckel 3 verschlossen ist. Dabei legt sich der Deckel 3 auf eine die Dachöffnung 2 umgebende, umlaufende Dichtung 28 von oben her an. Der Deckel 3 ist zu beiden Längsseiten mit einem Trägerteil 4 versehen, das einen vorderen Kulissenschlitz 5, einen mittleren Kulissenschlitz 6 und einen hinteren Kulissenschlitz 7 aufweist. Wie in FIG. 2 zu sehen ist, greift in den vorderen 5 und den hinteren Kulissenschlitz 7 jeweils ein vorderer Kulissenstift 8 bzw. ein hinterer Kulissenstift 9 ein, die beide an einem Schlitten 10 ausgebildet oder angebracht und somit gegeneinander feststehend angeordnet sind. In den mittleren Kulissenschlitz 6 greift ein an einem dachfesten Halter 11 ausgebildeter mittlerer Kulissenstift 12 ein. Der Schlitten 10 ist in bekannter Weise in Dachlängsrichtung über ein drucksteifes Antriebskabel 13 verschiebbar, welches von einem elektrischen Antrieb 14 angtrieben ist. Es kann jedoch auch in bekannter Weise ein manueller Kurbelantrieb vorgesehen sein.

In FIG. 2 ist der Deckel 3 in Seitenansicht in der Schließstellung von FIG. 1 gezeigt. Die Kulissenstifte 8 und 9 liegen jeweils an dem hinteren Ende der Kulissenschlitze 5 bzw. 7 an, das jeweils von einem ebenen Abschnitt 15 bzw. 16 gebildet wird. Der Kulissenstift 12 liegt an dem oberen Ende des mittleren Kulissenschlitzes 6 an.

Zum Öffnen des Deckels 3 wird der Schlitten 10 nach vorn bewegt. Da der obere Abschnitt 17 des mittleren Kulissenschlitzes 6 im wesentlichen senkrecht verläuft bzw. nur leicht nach vorn geneigt ist, wird der Deckel 3 durch den dachfesten Kulissenstift 12 an einer Verschiebung in Dachlängsrichtung gehindert. Die Kulissenstifte 8 bzw. 9 gleiten jeweils in einem linear nach vorn abfallenden Abschnitt 18 bzw. 19 der Kulissenschlitze 5 bzw. 7, wobei der Abschnitt 19 des hinteren Kulissenschlitzes 7 stärker geneigt ist als der Abschnitt 18 des vorderen Kulissenschlitzes 5. Dies bewirkt, daß die Hinterkante 20 des Deckels 3 wesentlich stärker als die Deckelvorderkante 21 angehoben wird, bis die in FIG. 3 gezeigte Deckelstellung erreicht ist, in welcher zwischen der Deckelhinterkante 20 und der festen Dachhaut 1 ein Lüftungsspalt besteht. Die beiden Kulissenstifte 8 bzw. 9 befinden sich nun jeweils am Anfang eines ebenen Abschnitts 22 bzw. 23 der Kulissenschlitze 5 bzw. 7, während der Kulissenstift 12 am Übergangspunkt zwischen dem oberen leicht nach vorn geneigten Abschnitt 17 und einem unteren, leicht nach hinten geneigten Abschnitt 24 des Kulissenschlitzes 6 steht.

Eine weitere Verschiebung des Schlittens 10 nach vorn bewirkt ein leichtes Anheben der Deckelvorderkante 21. Der ebene Abschnitt 22 des vorderen Kulissenschlitzes 5 ist kürzer als derjenige des hinteren Kulissenschlitzes 7, und er wird von einem steiler nach vorn linear abfallenden Abschnitt 25 gefolgt. Sobald der vordere Kulissenstift 8 in diesen Abschnitt 25 eintritt, wird die Deckelvorderkante 21 wesentlich stärker als die Deckelhinterkante 20 angehoben, bis schließlich die in FIG. 4 gezeigte Deckelstellung erreicht ist, in welcher beide Deckelkanten 20, 21 in etwa gleich weit angehoben sind, so daß der Deckel 3 in etwa parallel zu der Dachhaut 1 liegt und sowohl an der Deckelvorderkante 21 als auch an der Deckelhinterkante 20 ein Lüftungsspalt besteht. Der mittlere Kulissenstift 12 liegt nun an dem unteren Ende des mittleren Kulissenschlitzes 6 an. Der vordere Kulissenstift 8 liegt im Übergangsbereich zu einem ebenen Abschnitt 26 des Kulissenschlitzes 5, während der hintere Kulissenstift 9 im Übergangsbereich zu einem flach linear nach vorn ansteigenden Abschnitt 27 des Kulissenschlitzes 7 liegt.

Wird der Schlitten 10 weiter nach vorn geschoben, so bewirkt dies ein leichtes weiteres Anheben der Deckelvorderkante 21, während die Deckelhinterkante 20 wieder deutlich abgesenkt wird. Bei der in FIG. 5 gezeigten Endstellung besteht im wesentlichen nur noch zwischen der festen Dachhaut 1 und der Deckelvorderkante 21 ein Lüftungsspalt. Die Kulissenstifte 8 bzw. 9 liegen an den vorderen Enden der Kulissenschlitze 5 bzw. 7 an, während der mittlere Kulissenstift 12 wieder etwa im Übergangsbereich zwischen dem oberen Abschnitt 17 und dem unteren Abschnitt 24 des mittleren Kulissenschlitzes 6 liegt.

Wird der Schlitten 10 schließlich wieder nach hinten bewegt, so werden die beschriebenen Deckelstellungen in umgekehrter Reihenfolge bis zur Schließstellung durchlaufen.

Das beschriebene Fahrzeugdach ist insbesondere für die Fahrzeugkabine eines Nutzfahrzeuges oder für Omnibusse geeignet.

In der beschriebenen Ausfühungsform ist der Deckel durch den Eingriff eines dachfesten Kulissenstifts in einen deckelfesten Kulissenschlitz an einer Verschiebung in Dachlängsrichtung gehindert. Es kann jedoch auch ein deckelfester Kulissenstift in einen dachfesten Kulissenschlitz eingreifen, oder der Deckel kann auch auf jede andere Art an einer Verschiebung in Dachlängsrichtung gehindert werden. Die Neigungen des Kulissenschlitzes sind dabei in etwa auf die für die Schwenkbewegungen der Deckelkanten 20,21 notwendigen Radien abgestimmt, um eine Relativbewegung des Deckels zur Dichtung 28 zu minimieren.

Ebenso können die Funktionen von vorderem bzw. hinterem Kulissenstift und den entsprechenden Kulissenschlitzen vertauscht werden, indem die Kulissenstifte deckelfest angeordnet werden und die Kulissenschlitze auf einem gemeinsamen Schlitten in Dachlängsrichtung verschiebbar angeordnet werden.

Es ist auch kein zwingendes Erfordernis, daß der Deckel an einer Verschiebung in Dachlängsrichtung gehindert wird. Beispielsweise könnte bei der beschriebenen Ausführungsform der mittlere Kulissenstift ebenfalls auf einem in Dachlängsrichtung angetriebenen Schlitten ausgebildet sein, um zusätzlich eine Verschiebung des Deckels in Dachlängsrichtung zu erlauben, um die Dachöffnung zumindest teilweise freizulegen.

Es können auch die Kulissenschlitze deckelfest und die Kulissenstifte dachfest oder, im umgekehrten Fall, die Kulissenschlitze dachfest und die Kulissenstifte deckelfest angeordnet werden. Der Deckel wird in beiden Fällen für eine Verschiebung in Dachlängsrichtung angetrieben, wobei das Gleiten der Stifte in den Schlitzen Hebebewegungen des Deckels bewirkt. Falls eine Verschiebung des Deckels nicht gewünscht ist, werden die Kulissenstifte (bzw. Kulissenschlitze) nicht deckelfest, sondern entlang des Deckels verschiebbar angeordnet. Beim Öffnen werden die Kulissenstifte (bzw. Kulissenschlitze) für eine Verschiebebewegung angetrieben, während der Deckel an einer Verschiebung in Dachlängsrichtung gehindert wird.

Der Eingriff zwischen Eingriffselement und der entsprechenden Bahn, muß nicht, wie in dem Ausführungsbeispiel geschildert, als Eingriff eines Kulissenstifts in einen Kulissenschlitz ausgeführt sein. Es könnte stattdessen beispielsweise jeweils auch ein Steg vorgesehen sein, der zwischen Rollen geführt ist.

Wenn vorstehend von Kulissenschlitzen gesprochen wird, soll dieser Begriff auch Führungsbahnen, ggfs. auch mit nur einseitiger Abstützung des jeweiligen Führungselements, umfassen.

Wenn vorstehend von Kulissenstiften die Rede ist, sollen hierdurch auch andere Führungselemente, wie Gleitschuhe, Roller oder dergleichen umfaßt sein.

### Bezugszeichenliste

- **1**: Dachhaut
- **2**: Dachöffnung
- **3**: Deckel
- **4**: Trägerteil
- **5**: vorderer Kulissenschlitz
- **6**: mittlerer Kulissenschlitz
- **7**: hinterer Kulissenschlitz
- **8**: vorderer Kulissenstift
- **9**: hinterer Kulissenstift
- **10**: Schlitten
- **11**: dachfester Halter
- **12**: mittlerer Kulissenstift
- **13**: Antriebskabe
- **14**: Antrieb
- **15**: ebener Abschnitt von 5
- **16**: ebener Abschnitt von 7
- **17**: oberer Abschnitt von 6
- **18**: linear nach vorn abfallender Abschnitt von 5
- **19**: linear nach vorn abfallender Abschnitt von 6
- **20**: Deckelhinterkante
- **21**: Deckelvorderkante
- **22**: ebener Abschnitt von 5
- **23**: ebener Abschnitt von 7
- **24**: Abschnitt von 6
- **25**: linear abfallender Abschnitt von 5
- **26**: ebener Abschnitt von 5
- **27**: linear ansteigender Abschnitt v. 7
- **28**: Dichtung

## Patentansprüche

1. Fahrzeugdach mit einer von einem Deckel (3) wahlweise verschließbaren Dachöffnung (2) in einer festen Dachhaut (1), wobei mindestens eine Deckelmechanik mit mindestens einer vorderen Bahn (5) und einer feststehend dazu angeordneten hinteren Bahn (7) vorgesehen ist, in welchen jeweils ein erstes Eingriffselement (8) bzw. zweites Eingriffselement (9) verschiebbar geführt ist, die fest miteinander verbunden sind. **dadurch gekennzeichnet, daß** jede der Bahnen (5, 7) wenigstens drei Bahnabschnitte (15, 18, 22, 25, 26; 16, 19, 23, 27) mit unterschiedlicher Neigung aufweist.

2. Fahrzeugdach nach Anspruch 1, **dadurch gekennzeichnet, daß** die vordere Bahn (5) und die hintere Bahn (7) deckelfest und die beiden Eingriffselemente (8, 9) gegenüber der festen Dachhaut (1) verschiebbar angeordnet sind.

3. Fahrzeugdach nach Anspruch 2, **dadurch gekennzeichnet, daß** der Deckel (3) an einer Verschiebung in Dachlängsrichtung im wesentlichen gehindert ist.

4. Fahrzeugdach nach Anspruch 3, **dadurch gekennzeichnet, daß** die Verschiebung des Deckels (3) in Dachlängsrichtung dadurch verhindert wird, daß ein deckelfestes Element (6) und ein dachfestes Element (12) gegeneinander verschiebbar miteinander in Eingriff stehen.

5. Fahrzeugdach nach Anspruch 4, **dadurch gekennzeichnet, daß** die Verschiebung des Deckels (3) in Dachlängsrichtung dadurch verhindert wird, daß eine dritte deckelfeste Bahn (6) vorgesehen ist, in welcher ein dachfestes drittes Eingriffselement (12) verschiebbar geführt ist.

6. Fahrzeugdach nach Anspruch 2 bis 5, **dadurch gekennzeichnet, daß** das erste Eingriffselement (8) und das zweite Eingriffselement (9) an einem Schlitten (10) ausgebildet sind, der für eine Verschiebung in Dachlängsrichtung angetrieben ist.

7. Fahrzeugdach nach Anspruch 2 bis 6, **dadurch gekennzeichnet, daß** die deckelfesten Bahnen als Kulissenschlitze (5, 6, 7) und die Eingriffselemente als Kulissenstifte (8, 9, 12) ausgeführt sind.

8. Fahrzeugdach nach Anspruch 7, **dadurch gekennzeichnet, daß** der vordere Kulissenschlitz (5) und der hintere Kulissenschlitz (7) so ausgebildet sind, daß folgende Deckelstellungen möglich sind: nur Deckelhinterkante (20) angehoben; Deckelvorderkante (21) und Deckelhinterkante angehoben; nur Deckelhinterkante angehoben.

9. Fahrzeugdach nach Anspruch 8, **dadurch gekennzeichnet, daß** bei einer Bewegung des ersten Kulissenstifts (8) bzw. des zweiten Kulissenstifts (9) von einem Ende des jeweiligen Kulissenschlitzes (5, 7) zu dem anderen Ende die Deckelstellungen in der folgenden Reihenfolge durchlaufen werden: Schließstellung; nur Deckelhinterkante angehoben; Deckelvorderkante und Deckelhinterkante angehoben; nur Deckelhinterkante angehoben.

10. Fahrzeugdach nach Anspruch 9, **dadurch gekennzeichnet, daß** der vordere Kulissenschlitz (5) folgende Abschnitte aufweist: einen ebenen Bahnabschnitt (15), einen nach vorn linear abfallenden Bahnabschnitt (18), einen ebenen Bahnabschnitt (22), einen steiler nach vom linear abfallenden Bahnabschnitt (25) und einen ebenen Bahnabschnitt (26), während der hintere Kulissenschlitz (7) folgende Abschnitte aufweist: einen ebenen Bahnabschnitt (16), einen nach vorn linear abfallenden Bahnabschnitt (19), jedoch mit größerer Steigung als die vordere Kulissenbahn, einen ebenen Bahnabschnitt (23) sowie einen flach nach vorn linear ansteigenden Bahnabschnitt (27).

11. Fahrzeugdach nach Anspruch 5, **dadurch gekennzeichnet, daß** die dritte Kulissenbahn (6) in ihrem oberen Abschnitt (17) leicht nach vom geneigt ist, während sie in ihrem unteren Abschnitt (24) leicht nach hinten geneigt ist.

12. Fahrzeugdach nach Anspruch 6, **dadurch gekennzeichnet, daß** der Schlitten (10) über ein drucksteifes Antriebskabel (13) von einem Elektromotor (14) angetrieben ist.

13. Fahrzeugdach nach einem der vorhergehenden Ansprüche, **dadurch gekennzeichnet, daß** an jeder Deckellängsseite eine Deckelmechanik vorgesehen ist.

## Claims

1. Vehicle roof comprising in a fixed roof panel (1) a roof opening (2) which can be closed as required by a cover (3), at least one cover mechanism being provided and comprising at least a front track (5) and a rear track (7) fixedly arranged relative thereto, in which a first engagement element (8) and a second engagement element (9) respectively rigidly connected together are displaceably guided, **characterised in that** each of the tracks (5, 7) has at least three track sections (15, 18, 22, 25, 26; 16, 19, 23, 27) of varying inclination.

2. Vehicle roof according to claim 1, **characterised in that** the front track (5) and the rear track (7) are fixed to the cover and the two engagement elements (8, 9) are arranged so that they are displaceable with respect to the fixed roof panel (1).

3. Vehicle roof according to claim 2, **characterised in that** displacement of the cover (3) in the longitudinal direction of the roof is substantially prevented.

4. Vehicle roof according to claim 3, **characterised in that** displacement of the cover (3) in the longitudinal direction of the roof is prevented **in that** an element (6) fixed to the cover and an element (12) fixed to the roof are engaged with one another in such a manner that they are displaceable relative to one another.

5. Vehicle roof according to claim 4, **characterised in that** displacement of the cover (3) in the longitudinal direction of the roof is prevented by providing a third track (6) fixed to the cover in which a third engagement element (12) fixed to the roof is displaceably guided.

6. Vehicle roof according to claims 2 to 5, **characterised in that** the first engagement element (8) and the second engagement element (9) are formed on a slide (10) driven for displacement in the longitudinal direction of the roof.

7. Vehicle roof according to claims 2 to 6, **characterised in that** the tracks fixed to the cover are in the form of guide slots (5, 6, 7) and the engagement elements are in the form of guide pins (8, 9, 12).

8. Vehicle roof according to claim 7, **characterised in that** the front guide slot (5) and the rear guide slot (7) are designed in such a manner that the following cover positions are possible: only the rear edge (20) of the cover raised; front edge (21) of the cover and rear edge of the cover raised; only the rear edge of the cover raised.

9. Vehicle roof according to claim 8, **characterised in that**, when the first guide pin (8) or the second guide pin (9) moves from one end of the respective guide slot (5, 7) to the other, the sequence of cover positions is as follows: closed position; only the rear edge of the cover raised; front edge of the cover and rear edge of the cover raised; only the rear edge of the cover raised.

10. Vehicle roof according to claim 9, **characterised in that** the front guide slot (5) has the following sections: a level track section (15), a track section (18) sloping linearly downwards towards the front, a level track section (22), a track section (25) sloping more steeply linearly downwards towards the front and a level track section (26), while the rear guide slot (7) has the following sections: a level track section (16), a track section (19) sloping linearly downwards towards the front, but with a greater inclination than the front guide track, a level track section (23) and a track section (27) sloping gently linearly upwards towards the front.

11. Vehicle roof according to claim 5, **characterised in that** the third guide track (6) is inclined slightly towards the front in its upper section (17), while it is inclined slightly towards the rear in its lower section (24).

12. Vehicle roof according to claim 6, **characterised in that** the slide (10) is driven by an electric motor (14) via a pressure-resistant drive cable (13).

13. Vehicle roof according to one of the preceding claims, **characterised in that** a cover mechanism is provided on each longitudinal side of the cover.

## Revendications

1. Toit de véhicule avec une ouverture de toit (2) pouvant être fermée éventuellement par un capot (3) dans un panneau de toit (1) fixe, au moins un mécanisme de capot avec au moins une glissière (5) avant et une glissière (7) arrière disposée de façon fixe étant prévu, dans lequel respectivement un premier élément d'engrènement (8) et un deuxième élément d'engrènement (9) sont guidés de façon coulissante, qui sont reliés de façon fixe entre eux, **caractérisé en ce que** chacune des glissières (5, 7) présente au moins trois parties de glissière (15, 18, 22, 25, 26 ; 16, 19, 23, 27) avec une inclinaison différente.

2. Panneau de véhicule selon la revendication 1, **caractérisé en ce que** la glissière (5) avant et la glissière (7) arrière sont disposées de façon fixe sur le capot et les deux éléments d'engrènement (8, 9) sont disposés de façon coulissante par rapport à la couverture de toit (1) fixe.

3. Toit de véhicule selon la revendication 2, **caractérisé en ce que** le capot (3) est empêché principalement de coulisser dans le sens longitudinal du toit.

4. Toit de véhicule selon la revendication 3, **caractérisé en ce que** le coulissement du capot (3) dans le sens longitudinal du toit est empêché par le fait qu'un élément (6) fixé au capot et un élément (12) fixé au toit sont en prise réciproques de façon à pouvoir coulisser l'un par rapport à l'autre.

5. Toit de véhicule selon la revendication 4, **caractérisé en ce que** le coulissement du capot (3) dans le sens longitudinal du toit est empêché par le fait qu'il est prévue une troisième glissière (6) fixée au capot, dans laquelle un troisième élément d'engrènement (12) fixé au toit est guidé de façon coulissante.

6. Toit de véhicule selon les revendications 2 à 5, **caractérisé en ce que** le premier élément d'engrènement (8) et le deuxième élément d'engrènement (9) sont réalisés sur un coulisseau (10) qui est entraîné pour un déplacement dans le sens longitudinal du toit.

7. Toit de véhicule selon les revendications 2 à 6, **caractérisé en ce que** les glissières fixées au capot sont réalisées comme des fentes à coulisse (5, 6, 7) et les éléments d'engrènement comme des goupilles à coulisse (8, 9, 12).

8. Toit de véhicule selon la revendication 7, **caractérisé en ce que** la fente à coulisse (5) avant et la fente à coulisse (7) arrière sont réalisées de façon que les positions de capot suivantes soient possibles : seulement bord arrière du capot (20) soulevé, bord avant du capot (21) et bord arrière de capot levés ; seulement bord arrière du capot levé.

9. Toit de véhicule selon la revendication 8, **caractérisé en ce que**, lors d'un déplacement de la première goupille à coulisse (8) ou de la deuxième goupille à coulisse (9) d'une extrémité de la fente à coulisse (5, 7) respective à l'autre extrémité, les positions de capot sont traversées dans l'ordre de succession suivant : position de fermeture ; seulement bord arrière de capot soulevé ; bord avant de capot et bord arrière de capot soulevés ; seulement bord arrière de capot soulevé.

10. Toit de véhicule selon la revendication 9, **caractérisé en ce que** la fente à coulisse (5) avant présente les parties suivantes : une partie de glissière (15) plane, une partie de glissière (18) baissant linéairement vers l'avant, une partie de glissière (22) plane, une partie de glissière (25) descendant linéairement de façon plus importante vers l'avant et une partie de glissière (26) plane, tandis que la fente à coulisse (7) arrière présente les parties suivantes : une partie de glissière (16) plane, une partie de glissière (19) descendant linéairement vers l'avant, mais avec une plus grande pente que la glissière à coulisse avant, une partie de glissière (23) plane, ainsi qu'une partie de glissière (27) s'élevant linéairement à plat vers l'avant.

11. Toit de véhicule selon la revendication 5, **caractérisé en ce que** la troisième glissière à coulisse (6) est légèrement inclinée vers l'avant dans sa partie (17) supérieure, tandis qu'elle est légèrement inclinée vers l'arrière dans sa partie (24) inférieure.

12. Toit de véhicule selon la revendication 6, **caractérisé en ce que** le coulisseau (10) est entraîné par un moteur électrique (14) au moyen d'un câble d'entraînement (13) rigide à la pression.

13. Toit de véhicule selon l'une quelconque des revendications précédentes, **caractérisé en ce qu'**un mécanisme de capot est prévu sur chaque côté longitudinal du capot.
